# EUROPEAN PATENT APPLICATION

(11) **EP 4 764 183 A1**
(43) Date of publication of application: **24.06.2026**
(21) Application number: 25224684.8
(22) Date of filing: 17.12.2025
(51) Int. Cl.: F02C 6/20, F02C 7/32

(54) **AIRCRAFT ELECTRICAL POWER SYSTEM(S) WITH ELECTRIC MACHINE(S)**

(30) Priority: 17.12.2024 US 202418983806
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An aircraft assembly includes an engine core (48), a first electrical power system (34A) and a second electrical power system (34B). The first electrical power system (34A) includes a first electric machine (96A) and a first electric machine controller (98A). The first electric machine (96A) is operatively coupled to the engine core (48). The first electric machine controller (98A) is electrically coupled to the first electric machine (96A). The first electric machine controller (98A) is configured to control operation of the first electric machine (96A). The second electrical power system (34B) is electrically discrete from the first electrical power system (34A). The second electrical power system (34B) includes a second electric machine (96B) and a second electric machine controller (98B). The second electric machine (96B) is operatively coupled to the engine core (48). The second electric machine controller (98B) is electrically coupled to the second electric machine (96B). The second electric machine controller (98B) is configured to control operation of the second electric machine (96B).

## Description

### TECHNICAL FIELD

This disclosure relates generally to an aircraft powerplant and, more particularly, to electrical power systems for the aircraft powerplant.

### BACKGROUND INFORMATION

An aircraft powerplant such as an aircraft propulsion system may include an electrical power system with one or more electric machines. Various electrical power systems are known in the art. While these known electrical power systems have various benefits, there is still room in the art for improvement.

### SUMMARY OF THE DISCLOSURE

According to an aspect of the present invention, an assembly is provided for an aircraft. This assembly includes an engine core, a first electrical power system and a second electrical power system. The engine core includes a flowpath, a compressor section, a combustor section and a turbine section. The flowpath extends through the compressor section, the combustor section and the turbine section from an inlet into the flowpath to an exhaust from the flowpath. The first electrical power system includes a first electric machine and a first electric machine controller. The first electric machine is operatively coupled to the engine core. The first electric machine controller is electrically coupled to the first electric machine. The first electric machine controller is configured to control operation of the first electric machine. The second electrical power system is electrically discrete from the first electrical power system. The second electrical power system includes a second electric machine and a second electric machine controller. The second electric machine is operatively coupled to the engine core. The second electric machine controller is electrically coupled to the second electric machine. The second electric machine controller is configured to control operation of the second electric machine.

According to another aspect of the present invention, another assembly is provided for an aircraft. This assembly includes a turbine engine, a first electrical power system and a second electrical power system. The turbine engine includes a flowpath, a compressor section, a combustor section and a turbine section. The flowpath extends through the compressor section, the combustor section and the turbine section from an inlet into the flowpath to an exhaust from the flowpath. The first electrical power system includes a first electrical power element, a first electric machine and a first electric machine controller. The first electrical power element is configurable as at least one of a first electrical power source or a first electrical power storage. The first electric machine is operatively coupled to the turbine engine. The first electric machine is electrically coupled to the first electrical power element through the first electric machine controller. The second electrical power system is electrically independent of the first electrical power system. The second electrical power system includes a second electrical power element, a second electric machine and a second electric machine controller. The second electrical power element is configurable as at least one of a second electrical power source or a second electrical power storage. The second electric machine is operatively coupled to the turbine engine. The second electric machine is electrically coupled to the second electrical power element through the second electric machine controller.

According to still another aspect of the present invention, another assembly is provided for an aircraft. This assembly includes a propulsor rotor, an engine core, an inner case, an outer case and an electrical power system. The engine core is configured to drive rotation of the propulsor rotor about an axis. The engine core includes a flowpath, a compressor section, a combustor section and a turbine section. The flowpath extends through the compressor section, the combustor section and the turbine section from an inlet into the flowpath to an exhaust from the flowpath. The inner case at least partially houses the engine core. The outer case is disposed radially outboard of the inner case and houses the propulsor rotor. The electrical power system includes an electric machine and an electric machine controller. The electric machine is operatively coupled to the engine core. The electric machine is mounted with the inner case. The electric machine controller is configured to control operation of the electric machine. The electric machine controller is mounted with the outer case.

In an embodiment of the above, the first electrical power system may also include a first electrical power source electrically coupled to the first electric machine through the first electric machine controller. The first electrical power source may be electrically discrete from the second electrical power system.

In an embodiment according to any of the previous embodiments, the second electrical power system may also include a second electrical power source electrically coupled to the second electric machine through the second electric machine controller. The second electrical power source may be electrically discrete from the first electrical power system.

In an embodiment according to any of the previous embodiments, the first electrical power system may also include a first electrical power storage electrically coupled to the first electric machine through the first electric machine controller. The first electrical power storage may be electrically discrete from the second electrical power system.

In an embodiment according to any of the previous embodiments, the second electrical power system may also include a second electrical power storage electrically coupled to the second electric machine through the second electric machine controller. The second electrical power storage may be electrically discrete from the first electrical power system.

In an embodiment according to any of the previous embodiments, the first electrical power system may be configured to operate with a first system voltage. The second electrical power system may be configured to operate with a second system voltage that is different than the first system voltage.

In an embodiment according to any of the previous embodiments, the first electrical power system may be configured to operate with a first system current. The second electrical power system may be configured to operate with a second system current that is different than the first system current.

In an embodiment according to any of the previous embodiments, the first electrical power system may be configured to provide direct current electricity to one or more first electric components. The second electrical power system may be configured to provide alternating current electricity to one or more second electric components.

In an embodiment according to any of the previous embodiments, the first electric machine may be configurable as at least an electric motor. The second electric machine may be configurable as at least an electric generator.

In an embodiment according to any of the previous embodiments, the first electric machine may also be configurable as an electric generator.

In an embodiment according to any of the previous embodiments, the second electric machine may also be configurable as an electric motor.

In an embodiment according to any of the previous embodiments, the first electric machine and the second electric machine may each be at least configurable as an electric motor.

In an embodiment according to any of the previous embodiments, the first electric machine and the second electric machine may each be at least configurable as an electric generator.

In an embodiment according to any of the previous embodiments, the engine core may also include a first rotating structure and a second rotating structure rotationally independent of the first rotating structure. The first rotating structure may include a first bladed rotor disposed in one of the compressor section or the turbine section. The first rotating structure may be operatively coupled to a rotor of the first electric machine. The second rotating structure may include a second bladed rotor disposed in one of the compressor section or the turbine section. The second rotating structure may be operatively coupled to a rotor of the second electric machine.

In an embodiment according to any of the previous embodiments, the engine core may also include a rotating structure. The rotating structure may include a first bladed rotor disposed in one of the compressor section or the turbine section. A rotor of the first electric machine may be operatively coupled to the rotating structure. A rotor of the second electric machine may be operatively coupled to the rotating structure.

In an embodiment according to any of the previous embodiments, the assembly may also include a first engine case and a first nacelle structure. The first engine case may at least partially house the engine core. The first nacelle structure may provide an aerodynamic cover over the first engine case with a first compartment formed by and extending between the first engine case and the first nacelle structure. At least one of the first electric machine or the second electric machine may be disposed in the first compartment.

In an embodiment according to any of the previous embodiments, the assembly may also include a propulsor rotor, a second engine case and a second nacelle structure. The second engine case may house the propulsor rotor. The second nacelle structure may provide an aerodynamic cover over the second engine case with a second compartment formed by and extending between the second engine case and the second nacelle structure. At least one of the first electric machine controller or the second electric machine controller may be disposed in the second compartment.

In an embodiment according to any of the previous embodiments, the assembly may also include an open propulsor rotor. The engine core may be configured to drive rotation of the open propulsor rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side schematic illustration of an aircraft propulsion system with a ducted propulsor rotor.
FIG. 2 is a schematic illustration of a portion of the aircraft propulsion system with multiple electrical power systems.
FIG. 3 is a schematic illustration of a portion of the aircraft propulsion system with another arrangement of the electrical power systems.
FIG. 4 is a partial side schematic illustration of the aircraft propulsion system with an open propulsor rotor.

### DETAILED DESCRIPTION

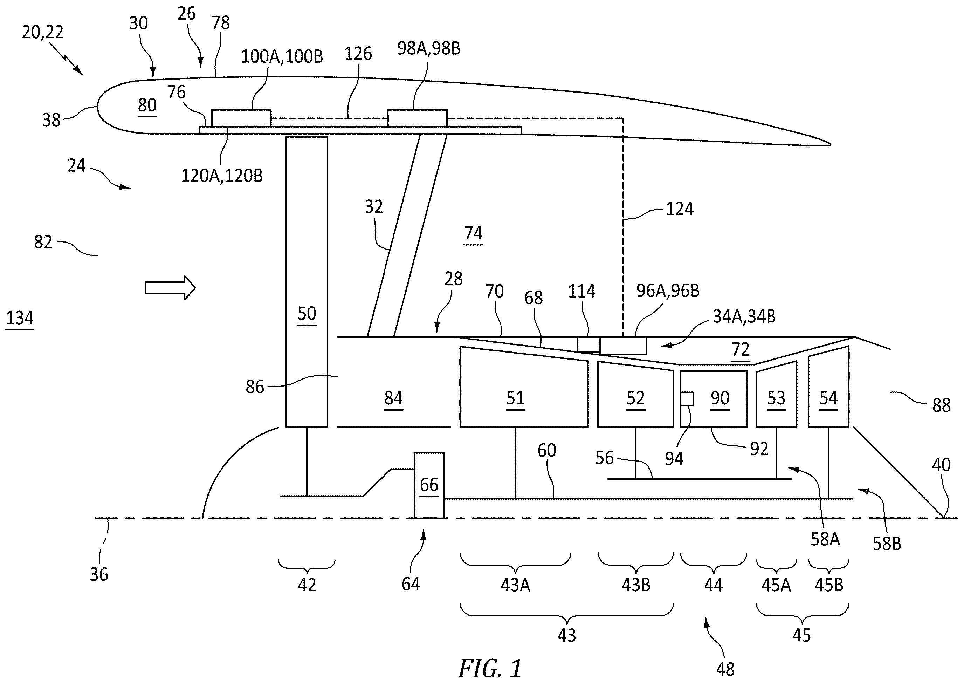

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system. Moreover, the aircraft powerplant 20 is not limited to propulsion system applications. The aircraft powerplant 20, for example, may alternatively (or also) be configured as an electrical power system for the aircraft; e.g., an auxiliary power unit (APU).

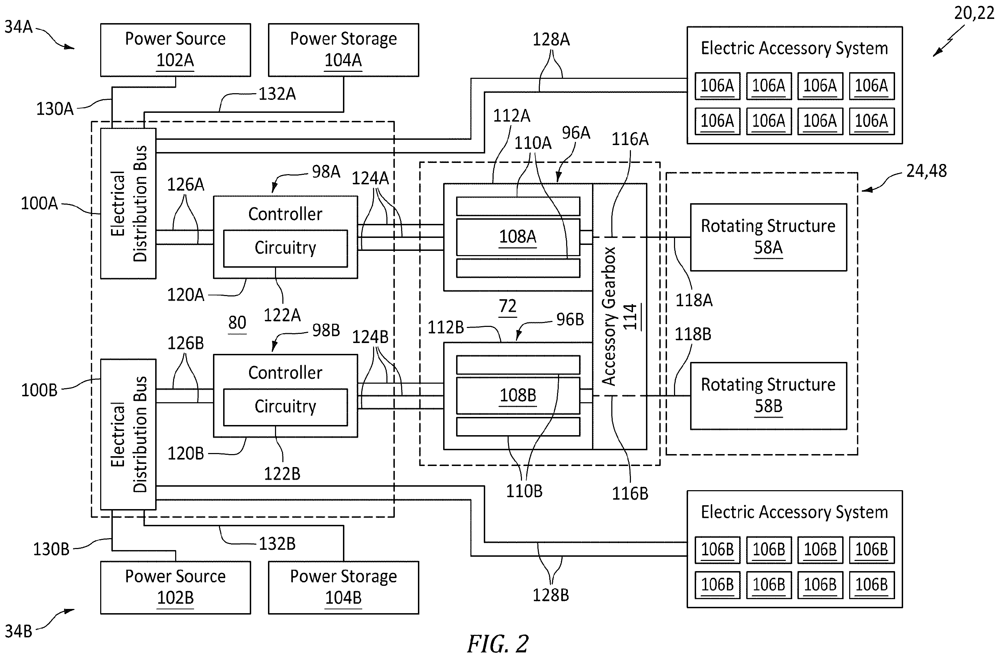

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes one or more electrical power systems 34A and 34B (generally referred to as "34") for the aircraft and its aircraft propulsion system 22; see also FIG. 2. The aircraft propulsion system 22 of FIG. 1 extends axially along an axis 36 between an axial forward, upstream end 38 of the aircraft propulsion system 22 and an axial aft, downstream end 40 of the aircraft propulsion system 22. Briefly, the propulsion system axis 36 may be a centerline axis of the aircraft propulsion system 22, the turbine engine 24 and/or one or more of its members. The propulsion system axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. Here, at least (or only) the LPC section 43A, the HPC section 43B, the combustor section 44, the HPT section 45A and the LPT section 45B collectively form a core 48 of the turbine engine 24.

The engine sections 42-45B may be arranged sequentially along the propulsion system axis 36 within the propulsion system housing 26. The propulsor section 42 includes a bladed propulsor rotor 50; e.g., a ducted propulsion rotor such as a fan rotor. The LPC section 43A includes a bladed low pressure compressor (LPC) rotor 51. The HPC section 43B includes a bladed high pressure compressor (HPC) rotor 52. The HPT section 45A includes a bladed high pressure turbine (HPT) rotor 53. The LPT section 45B includes a bladed low pressure turbine (LPT) rotor 54.

The HPC rotor 52 is coupled to and rotatable with the HPT rotor 53. The HPC rotor 52 of FIG. 1, for example, is connected to the HPT rotor 53 through a high speed shaft 56. At least (or only) the HPC rotor 52, the HPT rotor 53 and the high speed shaft 56 collectively form a high speed rotating structure 58A; e.g., a high speed spool of the engine core 48. This high speed rotating structure 58A of FIG. 1 and its members 52, 53 and 56 are rotatable about the propulsion system axis 36. However, it is contemplated the high speed rotating structure 58A may alternatively be rotatable about another axis radially and/or angularly offset from the rotational axis of the propulsor rotor 50 and/or the centerline axis of the turbine engine 24.

The LPC rotor 51 is coupled to and rotatable with the LPT rotor 54. The LPC rotor 51 of FIG. 1, for example, is connected to the LPT rotor 54 through a low speed shaft 60. At least (or only) the LPC rotor 51, the LPT rotor 54 and the low speed shaft 60 collectively form a low speed rotating structure 58B; e.g., a low speed spool of the engine core 48. This low speed rotating structure 58B is further coupled to the propulsor rotor 50 through a drivetrain 64. The drivetrain 64 may be configured as a geared drivetrain, where a geartrain 66 (e.g., a transmission, a speed change device, an epicyclic geartrain, etc.) is disposed between and operatively couples the propulsor rotor 50 to the low speed rotating structure 58B and its LPT rotor 54. With this arrangement, the propulsor rotor 50 may rotate at a different (e.g., slower) rotational speed than the low speed rotating structure 58B and its LPT rotor 54. Alternatively, the drivetrain 64 may be configured as a direct drive drivetrain, where the geartrain 66 is omitted. With such an arrangement, the propulsor rotor 50 rotates at a common (the same) rotational speed as the low speed rotating structure 58B and its LPT rotor 54. The low speed rotating structure 58B of FIG. 1 and its members 51, 54 and 60 as well as the propulsor rotor 50 are rotatable about the propulsion system axis 36. However, it is contemplated the low speed rotating structure 58B may alternatively be rotatable about another axis radially and/or angularly offset from the rotational axis of the propulsor rotor 50 and/or the centerline axis of the turbine engine 24.

The inner housing structure 28 of FIG. 1 includes an inner case 68 (e.g., a core case) for the turbine engine 24, an inner nacelle structure 70 (sometimes referred to as an inner fixed structure (IFS)) and an internal inner housing compartment 72. The inner case 68 is disposed radially outboard of, extends axially along and may circumscribe one or more or all of the engine sections 43A-45B and their respective engine rotors 51-54. The inner case 68 may thereby house and provide a support structure for the respective engine sections 43A-45B and their respective engine rotors 51-54. The inner nacelle structure 70 is configured to provide an aerodynamic cover over the engine core 48 and its inner case 68. The inner housing compartment 72 of FIG. 1 is formed by and is disposed radially between the inner case 68 and an inner barrel of the inner nacelle structure 70. The inner housing structure 28 and its inner nacelle structure 70 may also form a radial inner peripheral boundary of a bypass flowpath 74 (e.g., annular bypass flowpath) within the aircraft propulsion system 22.

The outer housing structure 30 of FIG. 1 includes an outer case 76 (e.g., a fan case) for the turbine engine 24, an outer nacelle structure 78 and an internal outer housing compartment 80. The outer case 76 is disposed radially outboard of, extends axially along and may circumscribe the propulsor section 42 and its propulsor rotor 50. The outer case 76 may thereby house and provide a containment structure for the propulsor section 42 and its propulsor rotor 50. The outer nacelle structure 78 is configured to provide an aerodynamic cover over the outer case 76. The outer housing compartment 80 of FIG. 1 is at least partially formed by and disposed radially between the outer case 76 and an outer portion (e.g., fan cowls) of the outer nacelle structure 78. The outer housing structure 30 and its outer nacelle structure 78 may also form a radial outer peripheral boundary of the bypass flowpath 74.

During operation, ambient air from outside of the aircraft enters the aircraft propulsion system 22 and its turbine engine 24 through an airflow inlet 82. This air is directed across the propulsor section 42 and into a core flowpath 84 (e.g., annular core flowpath) and the bypass flowpath 74. The core flowpath 84 of FIG. 1 extends sequentially through the LPC section 43A, the HPC section 43B, the combustor section 44, the HPT section 45A and the LPT section 45B from an airflow inlet 86 into the core flowpath 84 to a combustion products exhaust 88 out from the core flowpath 84 and the engine core 48. The air entering the core flowpath 84 may be referred to as "core air". The bypass flowpath 74 extends through a bypass duct, which bypass flowpath 74 and bypass duct bypass (e.g., are disposed radially outboard of and extend along) the engine core 48 and the inner housing structure 28. The air within the bypass flowpath 74 may be referred to as "bypass air".

The core air is compressed by the LPC rotor 51 and the HPC rotor 52 and is directed into a (e.g., annular) combustion chamber 90 of a (e.g., annular) combustor 92 in the combustor section 44. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 53 and the LPT rotor 54 about the propulsion system axis 36. The rotation of the HPT rotor 53 and the LPT rotor 54 respectively drive rotation of the HPC rotor 52 and the LPC rotor 51 about the propulsion system axis 36 and, thus, compression of the air received from the core inlet 86. The rotation of the LPT rotor 54 also drives rotation of the propulsor rotor 50 about the propulsion system axis 36. The rotation of the propulsor rotor 50 propels the bypass air through and out of the bypass flowpath 74. The propulsion of the bypass air may account for a majority of thrust generated by the turbine engine 24 of FIG. 1. Briefly, within the bypass flowpath 74, the guide vane structure 32 conditions (e.g., straightens out, de-swirls, etc.) the flow of bypass air propelled by the propulsor rotor 50 to enhance the forward thrust.

Referring to FIG. 2, each of the electrical power systems 34A, 34B includes an electric machine 96A, 96B (generally referred to as "96"), an electric machine (EM) controller 98A, 98B (generally referred to as "98"), an electrical distribution bus 100A, 100B (generally referred to as "100"), and one or more electrical power elements such as electrical power source 102A, 102B (generally referred to as "102") and/or an electrical power storage 104A, 104B (generally referred to as "104"). One or more of the electrical power systems 34A, 34B may (or may not) also each include one or more additional electric devices 106A, 106B (generally referred to as "106"). These electrical power systems 34 may be configured as electrically discrete power systems for the aircraft and its aircraft propulsion system 22. The first electrical power system 34A and its system elements 96A, 98A, 100A, 102A, 104A and 106A of FIG. 2, for example, are electrically independent (e.g., completely electrically decoupled) from the second electrical power system 34B. Similarly, the second electrical power system 34B and its system elements 96B, 98B, 100B, 102B, 104B and 106B of FIG. 2 are electrically independent (e.g., completely electrically decoupled) from the first electrical power system 34A. Each electrical power system 34 may thereby be uniquely tailored for operation of one or more of its respective system elements 96, 98, 100, 102, 104 and/or 106.

Each electric machine 96A, 96B of FIG. 2 includes an electric machine rotor 108A, 108B (generally referred to as "108"), an electric machine stator 110A, 110B (generally referred to as "110") and an electric machine housing 112A, 112B (generally referred to as "112"). The machine rotor 108 is rotatable about a rotational axis of the machine rotor 108. The machine stator 110 of FIG. 2 is radially outboard of and circumscribes the machine rotor 108. With this arrangement, each electric machine 96 is configured as a radial flux electric machine. The electric machines 96 of the present disclosure, however, are not limited to such an exemplary rotor-stator configuration nor to radial flux arrangements. The machine rotor 108, for example, may alternatively be radially outboard of and circumscribe the machine stator 110. In another example, the machine rotor 108 may be axially next to the machine stator 110 configuring the respective electric machine 96 as an axial flux electric machine. Referring still to FIG. 2, the machine rotor 108 and the machine stator 110 are at least partially or completely housed within the machine housing 112.

The electric machines 96 may be mounted to a common stationary component of the aircraft propulsion system 22. Each electric machine 96 of FIG. 2, for example, is mounted to a gearbox 114 (e.g., an accessory gearbox) for the turbine engine 24. This gearbox 114 may be disposed within the inner housing compartment 72. The gearbox 114 of FIG. 1, for example, is located radially outboard of and next to the inner case 68, and the gearbox 114 is also mounted to the inner case 68. Each electric machine 96 of FIG. 1 is thereby disposed within the inner housing compartment 72 and mounted with the inner housing structure 28 and its inner case 68; e.g., at least indirectly mounted to the inner case 68 through the gearbox 114.

Referring to FIG. 2, each electric machine 96A, 96B is operatively coupled to a respective one of the engine rotating structures 58A, 58B (generally referred to as "58") through the gearbox 114. Each machine rotor 108A, 108B of FIG. 2, for example, is mechanically coupled to a respective gear system 116A, 116B (generally referred to as "116") of the gearbox 114, and the gearbox gear system 116A, 116B is mechanically coupled to the respective engine rotating structure 58A, 58B through a respective drivetrain 118A, 118B (generally referred to as "118"). This drivetrain 118 may be configured as or otherwise include a shaft, a tower shaft assembly, another gearbox (e.g., an angle gearbox), and/or the like.

Each electric machine 96 of FIG. 2 may be configurable as an electric motor and/or an electric generator; e.g., an electric motor-generator. For example, during a motor mode of operation, a respective electric machine 96 may operate as the electric motor to convert electricity into mechanical power. The machine stator 110, for example, may generate an electromagnetic field with the machine rotor 108 using a received current of electricity. This electromagnetic field may drive rotation of the machine rotor 108. The machine rotor 108, in turn, may provide mechanical power to and drive rotation of the respective engine rotating structure 58 through the gearbox 114 and the respective drivetrain 118. This mechanical power may be provided to boost power or completely power the rotation of the respective engine rotating structure 58. By contrast, during a generator mode of operation, the electric machine 96 may operate as the electric generator to convert mechanical power received from the respective engine rotating structure 58 into electricity. Rotation of the machine rotor 108, for example, may be rotationally driven by rotation of the respective engine rotating structure 58 through the respective drivetrain 118 and the gearbox 114. The rotation of the machine rotor 108 may generate an electromagnetic field with the machine stator 110, and the machine stator 110 may convert energy from the electromagnetic field into electricity. The respective electric machine 96 may then output a current of electricity for storage and/or further use. The electric machines 96 of the present disclosure, however, are not limited to such exemplary operation. For example, one, some or all of the electric machines 96 may alternatively each be configured as a dedicated electric generator; e.g., without the electric motor functionality. One, some or all of the electric machines 96 may alternatively each be configured as a dedicated electric motor; e.g., without the electric generator functionality.

Each EM controller 98A, 98B includes a controller housing 120A, 120B (generally referred to as "120") and internal controller circuitry 122A, 122B (generally referred to as "122"). The controller housing 120 may be configured as an enclosed case (e.g., a closed or sealed container) for the respective controller circuitry 122. The controller circuitry 122 is disposed within an interior of the controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), transformer(s), and/or the like.

Each EM controller 98A, 98B is electrically coupled to the respective electric machine 96A, 96B through one or more electric cables 124A, 124B (generally referred to as "124"); e.g., high voltage electric cables, power feeder cables, etc. More particularly, the controller circuitry 122 of each EM controller 98 is electrically coupled to the respective electric machine 96 and its machine stator 110 through the respective electric cables 124. Similarly, each EM controller 98A, 98B is electrically coupled to the respective electrical distribution bus 100A, 100B through one or more electric cables 126A, 126B (generally referred to as "126"); e.g., high voltage electric cables, power feeder cables, etc. More particularly, the controller circuitry 122 of each EM controller 98 is electrically coupled to the respective electrical distribution bus 100 through the respective electric cables 126.

Each EM controller 98 and its controller circuitry 122 are configured to control operation of the respective electric machine 96. For example, when operating as the electric motor, the respective EM controller 98 and its controller circuitry 122 are configured to regulate a flow of electricity from the respective electrical distribution bus 100 to the respective electric machine 96. This electricity flow regulation may include: (a) turning-on the flow of electricity from the respective electrical distribution bus 100 to the respective electric machine 96 (e.g., electrically coupling the respective electric machine 96 to the respective electrical distribution bus 100); (b) turning-off the flow of electricity from the respective electrical distribution bus 100 to the respective electric machine 96 (e.g., electrically decoupling the respective electric machine 96 from the electrical distribution bus 100); (c) moderating the flow of electricity from the respective electrical distribution bus 100 to the respective electric machine 96. Here, the respective EM controller 98 operates as a motor controller. In another example, when operating as the electric generator, the respective EM controller 98 and its controller circuitry 122 are configured to regulate a flow of electricity from the respective electric machine 96 to the respective electrical distribution bus 100. This electricity flow regulation may include: (a) turning-on the flow of electricity from the respective electric machine 96 to the respective electrical distribution bus 100 (e.g., electrically coupling the respective electric machine 96 to the respective electrical distribution bus 100); (b) turning-off the flow of electricity from the respective electric machine 96 to the respective electrical distribution bus 100 (e.g., electrically decoupling the respective electric machine 96 from the respective electrical distribution bus 100); (c) moderating the flow of electricity from the respective electric machine 96 to the respective electrical distribution bus 100. Here, the respective EM controller 98 operates as a generator controller.

The EM controllers 98 may be disposed within the outer housing compartment 80. Each EM controller 98 of FIG. 1, for example, is located radially outboard of and next to the outer case 76, and each EM controller 98 and its controller housing 120 is mounted to the outer case 76. This mounting of the respective EM controller 98 to the outer case 76 may be a direct mounting or an indirect mounting through an intermediate mounting structure. With this arrangement, each EM controller 98 is disposed in a relatively cool portion of the aircraft propulsion system 22 and remote from the relatively hot engine core 48.

Referring to FIG. 2, each set of the electric devices 106A, 106B may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 106 of FIG. 2 may be configured as part of one or more sub-systems for the aircraft propulsion system 22 and its turbine engine 24. Examples of these sub-systems include, but are not limited to: a fuel system for delivering the fuel to the fuel injectors 94 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 106A, 106B is electrically coupled to the respective electrical distribution bus 100 through one or more electric cables 128A, 128B (generally referred to as "128") (collectively schematically shown); e.g., high voltage electric cables, low voltage electric cables, power feeder cables, etc. Each electric device 106 may thereby receive a current of electricity from the respective electrical distribution bus 100 to power operation thereof.

In some embodiments, each of the electric devices 106 may be disposed in, mounted to and/or otherwise arranged with the aircraft propulsion system 22. In other embodiments, one or more of the electric devices 106 may also or alternatively be disposed, mounted and/or otherwise arranged outside of the aircraft propulsion system 22. Each of the electric devices 106 may be configured to service operation of one or more components and/or systems of the aircraft propulsion system 22 as generally described above. Alternatively, one or more of the electric devices 106 may be configured to service operation of one or more components and/or systems of the aircraft outside of the aircraft propulsion system 22. The electrical power systems 34 of the present disclosure therefore are not limited to including any particular types of electric devices or to any particular electric device locations in the aircraft.

Each electrical distribution bus 100 is electrically coupled to the respective electric machine 96 through its respective EM controller 98. Each electrical distribution bus 100 is electrically coupled to the respective power source 102A, 102B and/or the respective power storage 104A, 104B, schematically shown via 130A, 130B and 132A, 132B. Each electrical distribution bus 100A, 100B may also be electrically coupled to the respective set of the one or more electric devices 106A, 106B. With this arrangement, each electrical distribution bus 100 provides an intermediate connection between the various electrical members (e.g., 98, 102, 104 and/or 106) of the respective electrical power system 34A, 34B, while maintaining electrical independence from the other electrical power system 34B, 34A.

Each power source 102 may be configured as or may otherwise include an electric generator powered by the turbine engine 24 (see FIG. 1). Alternatively, each power source 102 may be configured as or may otherwise include an electric generator powered by another aircraft powerplant; e.g., an engine of a companion aircraft propulsion system, an engine of an auxiliary power unit (APU), a fuel cell system, etc.

Each power storage 104 is configured to receive electricity from the respective electrical distribution bus 100 for storage. Each power storage 104 is also (or alternatively) configured to provide the stored electricity to the respective electrical distribution bus 100. Each power storage 104, for example, may be configured as or otherwise include one or more electricity storage devices; e.g., batteries, super capacitors, etc.

Each electrical distribution bus 100 may be disposed at least partially or completely within the outer housing compartment 80. Each electrical distribution bus 100 of FIG. 1, for example, is located radially outboard of and next to the outer case 76, and each electrical distribution bus 100 may be mounted to the outer case 76. This mounting of the respective electrical distribution bus 100 to the outer case 76 may be a direct mounting or an indirect mounting through an intermediate mounting structure. With this arrangement, each electrical distribution bus 100 is disposed in the relatively cool portion of the aircraft propulsion system 22 and remote from the relatively hot engine core 48.

Referring to FIG. 2, by providing the aircraft propulsion system 22 with its discrete electrical power systems 34, each electrical power system 34 may be uniquely tailored for operation of one or more of its respective system elements. For example, one of the electrical power systems 34A, 34B may be configured to operate with a first system voltage and/or a first system current, whereas another one of the electrical power systems 34B, 34A may be configured to operate with a second system voltage that is different than the first system voltage and/or a second system current that is different than the first system current. In addition or alternatively, one of the electrical power systems 34A, 34B may be configured to provide direct current (DC) electrical power to one or more or all of its respective electric devices 106A, 106B, whereas another one of the electrical power systems 34 may be configured to provide alternating current (AC) electrical power to one or more or all of its respective electric devices 106B, 106A. Of course, in other embodiments, the electrical power systems 34 may be configured to operate with a common (the same) system voltage, a common system current, a common electrical current type (e.g., DC or AC). Here, the provision of the discrete electrical power systems 34 may facilitate operational redundancy for the aircraft and its aircraft propulsion system 22.

Each electric machine 96 of FIG. 2 is described above as being electrically coupled to, controlled by and/or otherwise associated with a single, dedicated one of the EM controllers 98. However, it is contemplated a single EM controller 98 may alternatively be electrically coupled to, may control and/or may otherwise be associated with multiple electric machines 96. It is also contemplated multiple EM controllers 98 may be electrically coupled to, may control and/or may otherwise be associated with one or more common electric machines 96.

The electric machines 96 of FIG. 2 are described above as being arranged with and mounted to the same gearbox 114. However, it is contemplated each electric machine 96 may alternatively be operatively coupled to the respective engine rotating structure 58 through a separate gearbox (e.g., accessory gearbox), or even without use of a gearbox in other embodiments. Moreover, while each electric machine 96 is described above as being mounted to the inner housing structure 28 and arranged within the inner housing compartment 72, it is contemplated one or more of the electric machines 96 may each alternatively be mounted and arranged elsewhere within the aircraft propulsion system 22; e.g., in the outer housing compartment 80, etc.

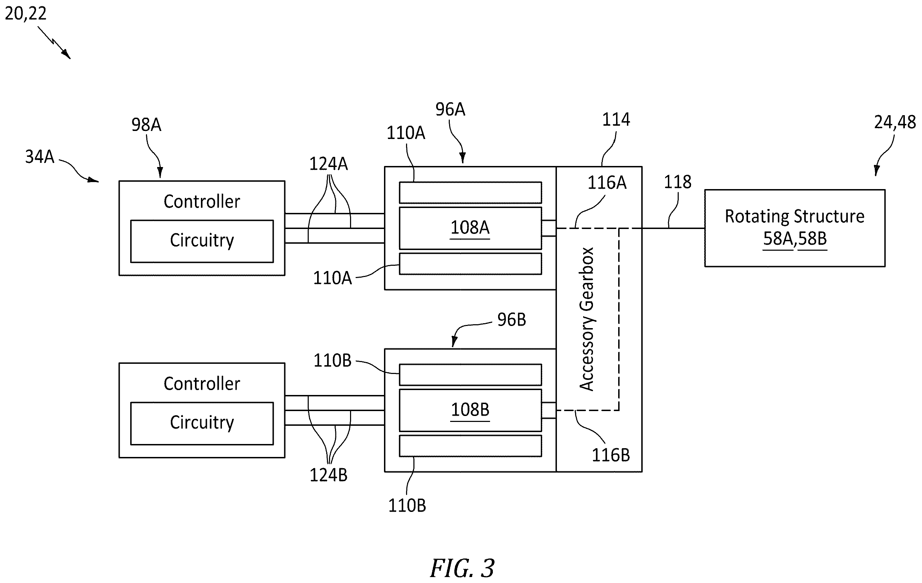

Each electric machine 96 of FIG. 2 and its machine rotor 108 are described above as being mechanically operationally coupled to and rotatable with a unique one of the engine rotating structures 58 of the aircraft propulsion system 22. However, it is contemplated multiple machine rotors 108 may alternatively be coupled to and rotatable with a common engine rotating structure 58 as shown, for example, in FIG. 3. It is also contemplated a single one of the machine rotors 108 may be coupled to and rotatable with multiple engine rotating structures 58, directly or through another device such as a differential or a clutch system. In addition, while the electric machines 96 are described above as being coupled to the engine rotating structures 58, it is contemplated the machine rotor 108 of one or more of the electric machines 96 may also or alternatively each be operatively coupled to another rotating device through the gearbox 114 and/or the drivetrain 118 such as, but not limited to, a pump rotor, an auxiliary compressor rotor, an actuator rotor, or the like.

Each EM controller 98 of FIG. 1 is described above as being mounted to the outer housing structure 30 and arranged within the outer housing compartment 80. However, it is contemplated one or more of the EM controllers 98 may each alternatively be mounted and arranged elsewhere within the aircraft propulsion system 22 (e.g., in the inner housing compartment 72) or outside of the aircraft propulsion system 22 (e.g., in a pylon structure for the aircraft propulsion system 22, in another airframe component of the aircraft, etc.).

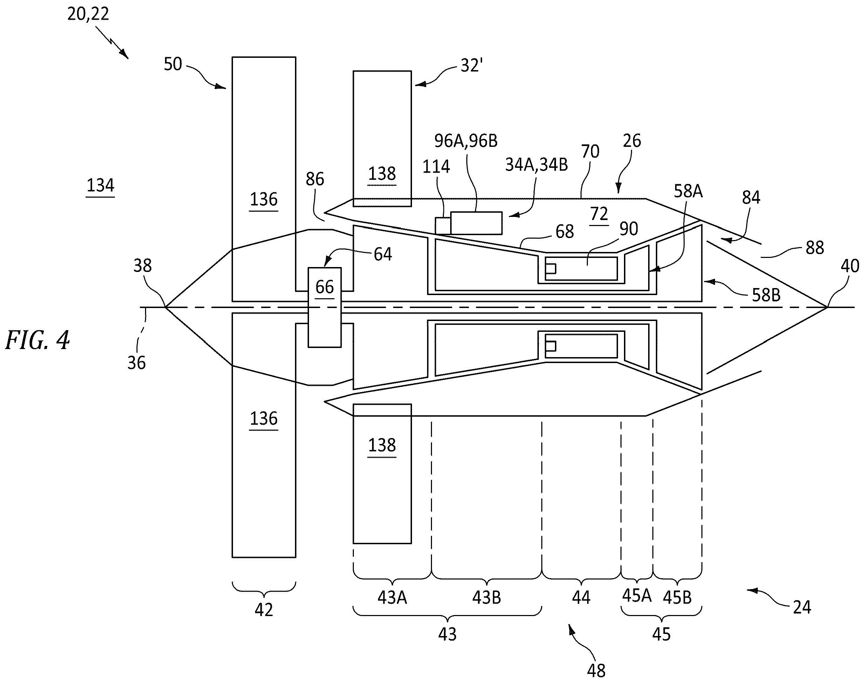

The aircraft propulsion system 22 of FIG. 1 is described above as a ducted propulsor propulsion system; e.g., the turbofan propulsion system. However, as described above, the present disclosure is not limited to such an exemplary aircraft propulsion system. For example, referring to FIG. 4, the outer housing structure 30 (see FIG. 1) may be omitted from the propulsion system housing 26 to open the propulsor rotor 50 up to an environment 134 external to the aircraft propulsion system 22 and, more generally, external to the aircraft. More particularly, the propulsor rotor 50 of FIG. 4 includes a plurality of open propulsor blades 136 arranged circumferentially about the propulsion system axis 36 in an annular array. Each of these propulsor blades 136 projects radially out from a base of the propulsor rotor 50, into the external environment 134, to an unshrouded distal tip of the respective propulsor blade 136. Each propulsor blade 136 is thereby configured as an un-ducted and unshrouded propulsor blade which is exposed to (e.g., disposed in) the surrounding external environment 134. With this arrangement, the propulsor rotor 50 is an open propulsor rotor (e.g., an un-ducted propulsor rotor) and the aircraft propulsion system 22 is configured as an open rotor propulsion system.

The aircraft propulsion system 22 of FIG. 4 is configured with an open guide vane structure 32'. This guide vane structure 32' of FIG. 4 includes a plurality of open exit guide vanes 138; e.g., airfoils. The guide vanes 138 are arranged and may (or may not) be equispaced circumferentially about the propulsion system axis 36 in an array; e.g., a circular array. This guide vane structure 32' and its guide vanes 138 are arranged axially next to (e.g., adjacent) the propulsor rotor 50 and its propulsor blades 136. The guide vane structure 32' and its guide vanes 138 of FIG. 4, for example, are arranged downstream of the propulsor rotor 50 and its propulsor blades 136, without (e.g., any) other elements axially therebetween to obstruct, turn and/or otherwise influence the air propelled by the propulsor rotor 50 to the guide vane structure 32' for example. Each of the guide vanes 138 projects radially out from an exterior surface of the inner housing structure 28, into the external environment 134, to a distal tip of the respective guide vane 138, which may be shrouded or unshrouded. Each guide vane 138 is thereby configured as an un-ducted and/or unshrouded/shrouded guide vane which is exposed to (e.g., disposed in) the surrounding external environment 134. With the foregoing arrangement, the guide vane structure 32' and its guide vanes 138 are configured to condition (e.g., straighten out, de-swirl, etc.) an outer stream of air propelled by the propulsor rotor 50 within the external environment 134 that bypass the engine core 48. Of course, in other embodiments, the guide vane structure 32' may be omitted where, for example, the aircraft propulsion system 22 is alternatively configured as a counter-rotating open rotor (CROR) aircraft propulsion system, etc.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
an engine core (48) including a flowpath (84), a compressor section (43), a combustor section (44) and a turbine section (45), the flowpath (84) extending through the compressor section (43), the combustor section (44) and the turbine section (45) from an inlet (86) into the flowpath (84) to an exhaust (88) from the flowpath (84);
a first electrical power system (34A) including a first electric machine (96A) and a first electric machine controller (98A), the first electric machine (96A) operatively coupled to the engine core (48), the first electric machine controller (98A) electrically coupled to the first electric machine (96A), and the first electric machine controller (98A) configured to control operation of the first electric machine (96A); and
a second electrical power system (34B) electrically discrete from the first electrical power system (34A), the second electrical power system (34B) including a second electric machine (96B) and a second electric machine controller (98B), the second electric machine (96B) operatively coupled to the engine core (48), the second electric machine controller (98B) electrically coupled to the second electric machine (96B), and the second electric machine controller (96B) configured to control operation of the second electric machine (96B).

2. The assembly of claim 1, wherein the first electrical power system (34A) further includes a first electrical power source (102A) electrically coupled to the first electric machine (96A) through the first electric machine controller (98A), and the first electrical power source (102A) is electrically discrete from the second electrical power system (34B).

3. The assembly of claim 2, wherein the second electrical power system (34B) further includes a second electrical power source (102B) electrically coupled to the second electric machine (96B) through the second electric machine controller (96B), and the second electrical power source (102B) is electrically discrete from the first electrical power system (34A).

4. The assembly of claim 1, 2 or 3, wherein the first electrical power system (34A) further includes a first electrical power storage (104A) electrically coupled to the first electric machine (96A) through the first electric machine controller (98A), and the first electrical power storage (104A) is electrically discrete from the second electrical power system (34B).

5. The assembly of claim 4, wherein the second electrical power system (34B) further includes a second electrical power storage (104B) electrically coupled to the second electric machine (96B) through the second electric machine controller (98B), and the second electrical power storage (104B) is electrically discrete from the first electrical power system (34A).

6. The assembly of any preceding claim, wherein
the first electrical power system (34A) is configured to operate with a first system voltage; and
the second electrical power system (34B) is configured to operate with a second system voltage that is different than the first system voltage.

7. The assembly of any preceding claim, wherein
the first electrical power system (34A) is configured to operate with a first system current; and
the second electrical power system (34B) is configured to operate with a second system current that is different than the first system current.

8. The assembly of any preceding claim, wherein
the first electrical power system (34A) is configured to provide direct current electricity to one or more first electric components;
the second electrical power system (34B) is configured to provide alternating current electricity to one or more second electric components.

9. The assembly of any preceding claim, wherein
the first electric machine (96A) is configurable as at least an electric motor;
the second electric machine (96B) is configurable as at least an electric generator; and
optionally wherein the first electric machine (96A) is further configurable as an electric generator and/or the second electric machine (96B) is further configurable as an electric motor.

10. The assembly of any of claims 1 to 8, wherein the first electric machine (96A) and the second electric machine (96B) are each at least configurable as an electric motor, and/or wherein the first electric machine (96A) and the second electric machine (96B) are each at least configurable as an electric generator.

11. The assembly of any preceding claim, wherein
the engine core (48) further comprises a first rotating structure (58A) and a second rotating structure (58B) rotationally independent of the first rotating structure (58A);
the first rotating structure (58A) comprises a first bladed rotor (52, 53) disposed in one of the compressor section (43) or the turbine section (45), and the first rotating structure (58A) is operatively coupled to a rotor (108A) of the first electric machine (96A); and
the second rotating structure (58B) comprises a second bladed rotor (51, 54) disposed in one of the compressor section (43) or the turbine section (45), and the second rotating structure (58B) is operatively coupled to a rotor (108B) of the second electric machine (96B).

12. The assembly of any of claims 1 to 10, wherein
the engine core (48) further comprises a rotating structure (58A, 58B);
the rotating structure (58A, 58B) comprises a first bladed rotor (51, 52, 53, 54) disposed in one of the compressor section (43) or the turbine section (45);
a rotor (108A) of the first electric machine (96A) is operatively coupled to the rotating structure (58A, 58B); and
a rotor (108B) of the second electric machine (96B) is operatively coupled to the rotating structure (58A, 58B).

13. The assembly of any preceding claim, further comprising:
a first engine case (68) at least partially housing the engine core (48); and
a first nacelle structure (70) providing an aerodynamic cover over the first engine case (68) with a first compartment (72) formed by and extending between the first engine case (68) and the first nacelle structure (70);
at least one of the first electric machine (96A) or the second electric machine (96B) disposed in the first compartment (72).

14. The assembly of claim 13, further comprising:
a propulsor rotor (50), such as an open propulsor rotor (50);
a second engine case (76) housing the propulsor rotor (50); and
a second nacelle structure (78) providing an aerodynamic cover over the second engine case (76) with a second compartment (80) formed by and extending between the second engine case (76) and the second nacelle structure (78);
at least one of the first electric machine controller (98A) or the second electric machine controller (98B) disposed in the second compartment (80).

15. The assembly of claim 13, further comprising an open propulsor rotor (50), the engine core (48) configured to drive rotation of the open propulsor rotor (50).
